(19) Europäisches Patentamt
European Patent Office
Office européen des brevets

(11) EP 4 220 557 B1

(12) EUROPEAN PATENT SPECIFICATION

(45) Date of publication and mention
of the grant of the patent:
**10.09.2025 Bulletin 2025/37**

(51) International Patent Classification (IPC):
**G06T 7/73** (2017.01) **G06V 10/82** (2022.01)
**G06V 40/20** (2022.01)

(21) Application number: **22153890.3**

(22) Date of filing: **28.01.2022**

(52) Cooperative Patent Classification (CPC):
**G06T 7/73; G06V 40/23;** G06T 2207/10004;
G06T 2207/20072; G06T 2207/20084;
G06T 2207/30196; G06V 10/82

(54) **METHOD AND COMPUTER PROGRAM PRODUCT FOR DETERMINING A POSE OF A BODY MODEL IN 3D SPACE**

VERFAHREN UND COMPUTERPROGRAMMPRODUKT ZUR BESTIMMUNG EINER HALTUNG EINES KÖRPERMODELLS IM 3D-RAUM

PROCÉDÉ ET PRODUIT-PROGRAMME INFORMATIQUE POUR DÉTERMINER UNE POSE D'UN MODÈLE DE CORPS DANS UN ESPACE 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023 Bulletin 2023/31**

(73) Proprietor: **Reactive Reality GmbH**
**8010 Graz (AT)**

(72) Inventors:
• **Azizi, Niloofar**
**8010 Graz (AT)**
• **Poier, Georg**
**8010 Graz (AT)**
• **Grasmug, Philipp**
**8010 Graz (AT)**
• **Hauswiesner, Stefan**
**8010 Graz (AT)**

(74) Representative: **Epping - Hermann - Fischer Patentanwaltsgesellschaft mbH**
**Schloßschmidstraße 5**
**80639 München (DE)**

(56) References cited:
**CN-A- 113 420 676**

• ZHAO LONG ET AL: "Semantic Graph Convolutional Networks for 3D Human Pose Regression", 2019 IEEE/CVF CONFERENCE ON COMPUTER VISION AND PATTERN RECOGNITION (CVPR), IEEE, 15 June 2019 (2019-06-15), pages 3420 - 3430, XP033686284, DOI: 10.1109/CVPR.2019.00354
• CAI YUJUN ET AL: "Exploiting Spatial-Temporal Relationships for 3D Pose Estimation via Graph Convolutional Networks", 2019 IEEE/CVF INTERNATIONAL CONFERENCE ON COMPUTER VISION (ICCV), IEEE, 27 October 2019 (2019-10-27), pages 2272 - 2281, XP033723431, DOI: 10.1109/ICCV.2019.00236
• JIANG HAIYONG ET AL: "Skeleton-Aware 3D Human Shape Reconstruction From Point Clouds", 2019 IEEE/CVF INTERNATIONAL CONFERENCE ON COMPUTER VISION (ICCV), IEEE, 27 October 2019 (2019-10-27), pages 5430 - 5440, XP033723110, DOI: 10.1109/ICCV.2019.00553
• THEODOROS SOFIANOS ET AL: "Space-Time-Separable Graph Convolutional Network for Pose Forecasting", ARXIV.ORG, CORNELL UNIVERSITY LIBRARY, 201 OLIN LIBRARY CORNELL UNIVERSITY ITHACA, NY 14853, 9 October 2021 (2021-10-09), XP091075865

**Description**

The present disclosure relates to a computer implemented method and to a computer program product for determining a pose of a body model in 3D space from a 2D input. The present disclosure further relates to a computer implemented method and to a computer program product for determining a parameter set configured to be used in such method.

Estimating 3D human poses helps to analyze human motion and behavior and thus, enables high-level computer vision tasks like action recognition, sports analysis and augmented and virtual reality. Although human pose estimation approaches already achieve impressive results in 2D, this is not sufficient for many analysis tasks, because several 3D poses can project to the exactly same 2D pose. Thus, the knowledge of the 3rd dimension can significantly improve the results of the high-level tasks, e.g. for sports analysis. Poses are e.g. represented by a skeleton having several connected joints, the connections being rotated and/or translated differently depending on the pose.

3D human pose estimation is fundamental to understanding human behavior. Recently, promising results have been achieved by deep learning methods with graph convolutional networks (GCNs). However, a major limitation of GCNs is their inability to encode all the transformation distributions between joints explicitly.

Examples of conventional applications of GCNs for pose estimation can be found in:

ZHAO LONG ET AL: "Semantic Graph Convolutional Networks for 3D Human Pose Regression", 2019 IEEE/CVF CONFERENCE ON COMPUTER VISION AND PATTERN RECOGNITION (CVPR), IEEE, 15 June 2019, pages 3420-3430;

CAI YUJUN ET AL: "Exploiting Spatial-Temporal Relationships for 3D Pose Estimation via Graph Convolutional Networks", 2019 IEEE/CVF INTERNATIONAL CONFERENCE ON COMPUTER VISION (ICCV), IEEE, 27 October 2019, pages 2272-2281;

Patent publication CN 113 420 676 A titled "Three-dimensional (3D) human body posture estimation method of two-path feature staggered fusion network";

JIANG HAIYONG ET AL: "Skeleton-Aware 3D Human Shape Reconstruction From Point Clouds", 2019 IEEE/CVF INTERNATIONAL CONFERENCE ON COMPUTER VISION (ICCV), IEEE, 27 October 2019, pages 5430-5440; and

THEODOROS SOFIANOS ET AL: "Space-Time-Separable Graph Convolutional Network for Pose Forecasting", ARXIV.ORG, CORNELL UNIVERSITY LIBRARY, 201 OLIN LIBRARY CORNELL UNIVERSITY ITHACA, NY 14853, 9 October 2021.

An object to be achieved is to provide an improved processing concept that allows the determination of a pose of a body model in 3D space from a 2D input with less computational effort.

This object is achieved with the subject-matter of the independent claims. Embodiments and developments derive from the dependent claims.

The input data in the task of determination of a pose of a body model in 3D space are 2D joints of a body, e.g. a human body, which are represented as graph-structured data. Thus, due to the irregular nature of the data, GCNs are beneficial. It is recognized that conventional GCNs were able to achieve the state-of-the-art in the task of 3D human pose estimation with an already reasonable amount of parameters. However, in none of the conventional GCN works for 3D human pose estimation, rotation between joints was modeled explicitly.

The improved processing concept is based on the insight that learning the rotation distribution explicitly along with the translation distribution leads to encoding better feature representations. The inventors address this shortcoming and present a novel spectral GCN architecture, MöbiusGCN, to accurately learn the transformation between joints.

To this end, the Möbius transformation is leveraged on the eigenvalue matrix of the graph Laplacian. While conventional spectral GCNs applied for estimating the 3D pose of a body are defined in the real domain, the MöbiusGCN operates in the complex domain, which allows to encode all the transformations, i.e. rotation and translation, between nodes respectively joints simultaneously.

An enriched feature representation achieved by encoding the transformation distribution between joints using a Möbius transformation allows having a compact model. A light neural network architecture can make the network independent of expensive hardware setup and lets the neural network perform even in mobile phones and embedded devices during inference time. This can be achieved by the compact MöbiusGCN architecture.

Hence the improved processing concept leverages the Möbius transformation to explicitly encode the transformation, particularly rotation, between feature representations of the joints. Only a fraction of the model parameters, i.e. 2-9% of even the currently lightest conventional approaches is needed. The model parameters are e.g. trained with a training method based on a training data set being reducible compared to conventional approaches. Hence efficiency of a computer system can be improved and computational resources are reduced.

According to one embodiment of the improved processing concept, a computer implemented method for determining a pose of a body model in 3D space from a 2D input comprises acquiring an input graph representation of a body model in 2D space, the input graph representation comprising a plurality of joints with associated joint positions and interconnections between the joints. The input graph representation is processed with a sequential Möbius graph convolution, MGC, chain comprising one or more MGC blocks.

Sequential chain particularly defines that, if more than one block is present, each block provides its output to the subsequent block of the chain respectively to the chain output, if it is the last block of the chain. The order of MGC blocks is predetermined.

Each MGC block of the sequential MGC chain performs the following:

- receiving the input graph representation in 2D space as a block input if the MGC block is a first MGC block of the sequential MGC chain, or else receiving an output graph representation of a preceding MGC block of the sequential MGC chain as the block input;
- determining a set of graph signals from the block input;
- applying a weight matrix and a graph filter on the set of graph signals in order to generate a complex valued intermediate result, wherein the graph filter is based on a Möbius parameter set and is applied in a spectral GCN;
- transforming the complex valued intermediate result into a real valued result; and
- applying an activation function on the real valued result for generating the output graph representation of the MGC block.

A last MGC block of the sequential MGC chain provides the output graph representation of the body model in 3D space as an output.

For example, for applying the graph filter in a spectral GCN, a normalized Laplacian of the input graph representation is determined, e.g. based on the plurality of joints, e.g. vertices, and the interconnections, e.g. edges, between the joints. The term "Laplacian" stands for the Laplacian matrix, also called the graph Laplacian, admittance matrix, Kirchhoff matrix or discrete Laplacian, and is a matrix representation of a graph. The Laplacian matrix can be used to find many useful properties of a graph. For example, eigenvectors and eigenvalues of the normalized Laplacian may be determined for the application of the graph filter in the spectral GCN.

For example, the Möbius parameter set and weight factors of the weight matrix in each MGC block are predetermined and/or pre-trained with a machine learning algorithm. This will be described in more detail below.

For example, if a number of MGC blocks of the MGC chain is greater than 1, the Möbius parameter set and the weight matrix are different for each MGC block. This achieves, for example, that each MGC block performs a different transformation, i.e. rotation and/or translation, between the respective block input of the MGC block, i.e. the corresponding graph representation, and the output graph representation of the MGC block. Accordingly, various types of transformations can be concatenated with the serial processing of the MGC chain.

Each graph signal is a vector of a specific feature, e.g. positional value, for each joint respectively vertex of the graph representation. The set of graph signals is a matrix formed from such vectors for all features. If a number of MGC blocks of the MGC chain is greater than one, for example, the output graph representation of each MGC block except the last MGC block may be defined in a more than three-dimensional space, e.g. in 32, 64 or 128 dimensional space.

It should be apparent to the skilled reader that the respective graph representation of the block input of the subsequent MGC block is defined in the same dimensionality as the output graph representation of the corresponding preceding MGC block.

The use of higher dimensions for the graph representation allows more degrees of freedom for the transformations in each MGC block such that, for the overall MGC chain, complex transformations between the 2D input and the 3D output pose can be achieved.

A graph structure, in particular topological graph structure, in each MGC block is not changed between the respective block input and the respective block output, i.e. the output graph representation. For example, the number of joints and their interconnections, i.e. which joint is connected to which other joint, stays the same for all MGC blocks. However, a number of dimensions in which the joint positions are defined, is not part of the graph structure and may change.

With respect to the graph representation, the input graph representation and each output graph representation comprise vertices and edges for example. Therein, each vertex may correspond to a joint and comprises the associated joint position, and each edge corresponds to one of the interconnections between the joints.

For example, the input graph representation and each output graph representation are undirected, unweighted and connected.

In various implementations of the method, transforming the complex valued intermediate result from the complex domain into a real valued result in the real domain includes applying a bias, e.g. adding a bias, in particular in the real domain. Such bias may also be predetermined and/or pre-trained with a machine learning algorithm, in particular in conjunction with the Möbius parameter set and the weight factors.

For example, in various implementations the activation function comprises a Rectified Linear Unit, ReLU. However, other types of well-known activation functions could be used as well.

For example, the number of MGC blocks comprised by the sequential MGC chain is in the range from 5 to 10, e.g. from 6 to 8. For example, the inventors have achieved good results with seven MGC blocks. As each MGC block adds complexity to the MGC chain and the overall MöbiusGCN, the small number of blocks needed demonstrates the efficiency of the improved processing concept, e.g. in terms of reduced computational effort.

In some implementations the method further comprises receiving a 2D image, e.g. a 2D RGB image, of a body as the 2D input and determining the input graph representation of the body model in 2D space based on the 2D image. For example, a stacked hourglass architecture can be used to determine the 2D input graph representation from a single 2D image.

It should be noted for all implementations of the method of the improved processing concept that the determination of the output graph representation of the body model in 3D space is solely based on a single 2D input graph representation, particularly such that no other information about the pose of the body is available to the method than the single 2D input graph representation. This particularly excludes multiview approaches that make use of, for example, images from different viewing angles of the same pose.

As noted above, the Möbius parameters set and weight factors of the weight matrix and, if applicable, the bias, in each MGC block may be predetermined and/or pre-trained with a machine learning algorithm. To this end, the improved processing concept further includes a computer implemented method for determining at least one Möbius parameter set configured to be used in the method according to one of the implementations described above. For example, such a method includes providing a sequential MGC chain comprising one or more MGC blocks as defined above. The method further comprises providing a plurality of training data sets, wherein each of the training data sets comprise a 2D graph representation of a body model in 2D space, which comprises a plurality of joints with associated joint positions and interconnections between the joints, and an associated 3D graph representation of the body model in 3D space. For example, the associated 3D graph representation corresponds to a ground truth definition of the joints and their positions in 3D space for the joint positions in the 2D graph representation.

The method further includes training, using a machine learning algorithm, the Möbius parameter set and the weight matrix and, if applicable, the bias, of each MGC block of the sequential MGC chain by providing the 2D graph representation of each training data set as the input graph representation and providing the associated 3D graph representation as a desired output of the MGC chain.

It should be apparent to the skilled reader that the structure of the MGC chain, e.g. number of MGC blocks and respective dimensions within the MGC blocks, and the topological graph structure, are the same for the method that actually determines the pose of the body model in 3D space and the method that determines the corresponding Möbius parameter sets.

Once the respective Möbius parameter sets are determined, these can be fixedly used for any input graph representation having the defined graph structure for determining the corresponding pose of the body model in 3D space.

According to one embodiment of the improved processing concept, a computer program product for determining a pose of a body model in 3D space from a 2D input and/or for determining at least one Möbius parameter set to be used in the latter method comprises a non-transitory computer-readable storage medium and computer program instructions stored therein, enabling a computer system to execute a method according to one of the implementations described above.

Furthermore, a computer system may have a processor and a storage medium having computer program instructions stored therein, enabling the processor to execute a method according to one of the implementations described above.

The improved processing concept will be explained in more detail in the following with the aid of the drawings. Elements and functional blocks having the same or similar function bear the same reference numerals throughout the drawings. Hence their description is not necessarily repeated in following drawings.

In the drawings:

Figure 1    shows an example block diagram of a method for determining a pose of a body model in 3D space from a 2D input according to the improved processing concept;

Figure 2    shows an example detail of the method of Figure 1;

Figure 3    shows an example 2D input and a corresponding pose of a body model in 3D space;

Figure 4    shows various examples of 2D inputs with corresponding poses of a body model in 3D space;

Figure 5    shows an example block diagram of a method for determining at least one Möbius parameter set to be used in the method of Figure 1; and

Figure 6    shows an example system for producing a 3D representation of an object according to the improved processing concept.

The present disclosure provides a novel and improved processing concept for determining a pose of a body model in 3D space from a 2D input.

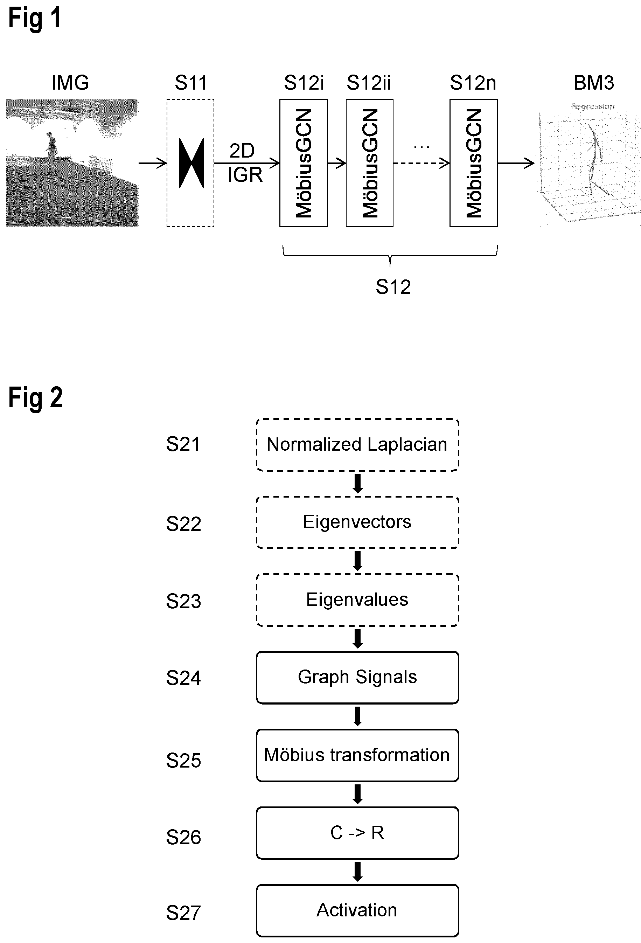

Figure 1 shows an example block diagram of a method according to this improved processing concept. Particularly, Figure 1 shows an overview of the improved processing concept from input to output, while details of the improved processing concept will be described in conjunction with the following figures.

The method as shown in Figure 1 may receive a 2D image IMG of a person performing an action and therefore having some pose. The image IMG may be a color image like an RGB image. The image IMG may be free from depth information; at least no use is made of such depth information, if available, according to the improved processing concept.

In optional step S11 2D joint positions are estimated from the image IMG. The joint positions define the positions of joints of a given skeleton of a body, respectively body model. Particularly, the number of joints of the skeleton and their interconnections are predefined. Hence, with step S11 the positions of these predefined joints are determined, respectively estimated. For example, a stacked hourglass architecture is used for this process. A stacked hourglass architecture is described, for example, in Newell at al. "Stacked Hourglass Networks for Human Pose Estimation" in ECCV, 2016.

The output of block S11 is provided to block S12 as a graph representation with the 2D joint positions of the body model. Hence, this body model acts as a 2D input graph representation IGR to block S12. Block S12 constitutes a sequential Möbius graph convolution, MGC, chain comprising one or more MGC blocks S12i, S12ii, ..., S12n, e.g. n MGC blocks. Each of these blocks has the same basic structure but may distinguish from each other by their set of parameters and at least partially in the sizes or formats of inputs and outputs. The blocks of the MGC chain S12 each provide a spectral GCN architecture, MöbiusGCN, the basic structure of which will be described in more detail in conjunction with Figure 2. The output of the MGC chain S12 is a body model with respective joint positions in 3D space. The output, again, is a graph representation having the same topological graph structure as the 2D input graph representation IGR, i.e. has the same number of joints and the same interconnection between these joints, but represents the pose of the person in the input image IMG in 3D space.

Such a 3D pose can be further evaluated or processed in various technical applications, e.g. for controlling an avatar or evaluating movements of a person, if subsequent images of the moving person are processed with the method of Figure 1. Examples therefore are action recognition, sport analysis, or touchless control of a computer using body poses. Further applications should not be excluded by these non-limiting examples.

As mentioned before, the step of producing the input graph representation from a 2D image is optional. The MGC chain S12 generally only requires 2D joint positions as input to predict the 3D pose. That is, it can exploit 2D joint positions from any source, e.g. derived from specific markers, sensors or manually defined. This further opens up the possibility to use the improved processing concept for easier data annotation or 3D animation of humans by providing an easier way to interact with the poses in the 2D image space.

As discussed before, the blocks of the MGC chain S12 implement a spectral GCN which, according to the improved processing concept, employs the Möbius transformation. Before going into detail, in the following the background of spectral GCNs is summarized.

Let $\mathcal{G}(V,E)$ represent a graph consisting of a finite set of N vertices $V = \{v_1, ... ,v_N\}$, and a set of M edges $E = \{e_1,...,e_M\}$, with $e_j = (v_i, v_k)$ where $v_i, v_k \in V$. The graph's adjacency matrix $A_{N \times N}$ contains 1 in case two vertices are connected and 0 otherwise. $D_{N \times N}$ is a diagonal matrix where $D_{ii}$ is the degree of vertex $v_i$. A graph is directed if $(v_i, v_k) \neq (v_k, v_i)$, otherwise it is an undirected graph. For an undirected graph, the adjacency matrix is symmetric. The non-normalized graph Laplacian matrix, defined as:

$$L = D - A \qquad\qquad (1)$$

can be normalized to:

$$\overline{L} = I - D^{-\frac{1}{2}} A D^{-\frac{1}{2}} \qquad\qquad (2)$$

where $I$ is the NxN identity matrix. $\overline{L}$ is real, symmetric, and positive semi-definite. Therefore, it has N ordered, real, and non-negative eigenvalues $\{\lambda_i: i = 1,...,N\}$ and corresponding orthonormal eigenvectors $\{u_i: i = 1,...,N\}$. The eigenvalues $\lambda_i$ are placed on a NxN diagonal matrix $\Lambda$.

A signal, also known as function, x defined on the vertices of the graph is a vector $x \in \mathbb{R}^N$, where its ith

component represents the function value at the i$^{th}$ vertex in V. Similarly, $X \in \mathbb{R}^{Nxd}$ is called a d-dimensional matrix of graph signals on $\mathcal{G}$.

The graph Fourier transform $\hat{x}$ of any graph signal $x \in \mathbb{R}^N$ is $\hat{x}(\lambda_\ell) := \langle u_\ell, x \rangle = \sum_{i=1}^N x(i)u_{\ell(i)}$.
It is the expansion of the graph signal x in terms of the eigenvectors of the graph Laplacian matrix. Eigenvalues and eigenvectors of the graph Laplacian matrix are analogous to frequencies and basis functions in the Fourier transform.

Spectral GCNs build upon the graph Fourier transform. Let x be the graph signal and y be the graph filter on graph $\mathcal{G}$ and $*\mathcal{G}$ denotes the graph convolution,

$$x *_G y = U(U^\top x \odot U^\top y) = U diag(U^\top y)U^\top x, \qquad (3)$$

where the matrix $U$ contains the eigenvectors of the normalized graph Laplacian and $\odot$ is the Hadamard product. This can also be written as:

$$x *_G g_\theta = U g_\theta(\Lambda)U^\top x, \qquad (4)$$

where $g_\theta(\Lambda))$ is a diagonal matrix consisting of the learnable parameters.

The generalization of Eq. (4) for the matrix of graph signals $X \in \mathbb{R}^{Nxd}$ is:

$$X^{l+1}[:,k] = \rho \left( \sum_{j=1}^{d^l} U g_{\theta,j,k} U^\top X^l[:,j] \right), \qquad (5)$$

where $l$ and $l$+1 are the $l^{th}$ and ($l$+1)$^{th}$ layers in the spectral GCN, respectively, $\rho$ is an activation function, and k is the k$^{th}$ graph signal in the (l + 1)$^{th}$ layer.

The MöbiusGCN according to the improved processing concept is a fractional GCN which applies the Möbius transformation on the eigenvalue matrix of the normalized Laplacian matrix to encode the transformations between joints.

A major drawback of previous spectral GCNs is that they do not encode the transformation distribution between nodes specifically. The improved processing concept addresses this by applying the Möbius transformation function over the eigenvalue matrix of the decomposed Laplacian matrix. This simultaneous encoding of the rotation and translation distribution in the complex domain leads to better feature representations and fewer parameters in the network.

The input to our MöbiusGCN are the $\kappa$ joint positions in 2D Euclidean space, given as $J = \{J_i \in \mathbb{R}^2 | i = 1,\dots,\kappa\}$, which may be computed from the image IMG. Our goal is then to predict the $K$ corresponding 3D Euclidean joint positions $\hat{Y} = \{\hat{Y}_i \in \mathbb{R}^3 | i = 1,\dots,\kappa\}$.

We leverage the structure of the input data, which can be represented by a connected, undirected and unweighted graph. The input graphs are fixed and share the same topological structure, which means the graph structure does not change, and each training and test example differs only in having different features at the vertices.

The general form of a Möbius transformation is given by $f(z) = \frac{az+b}{cz+d}$ where $a,b,c,d,z \in \mathbb{C}$ satisfying ad - bc $\neq$ 0. The Möbius transformation can be expressed as the composition of simple transformations. If $c \neq 0$, then:

- $f_1(z) = z + d/c$ defines translation by d/c,
- $f_2(z) = 1/z$ defines inversion and reflection with respect to the real axis,
- $f_3(z) = \frac{(bc-ad)}{c^2} z$ defines homothety and rotation,
- $f_4(z) = z + a/c$ defines the translation by a/c.

These functions can be composed to form the Möbius transformation:

$$f(z) = f4 \circ f3 \circ f2 \circ f1(z) = \frac{az+b}{cz+d} \qquad (6)$$

For two Möbius transformations *f* and *g*, *f ∘ g(z) = f(g(z))*. This means that the Möbius transformations can be concatenated.

The Möbius transformation function is analytic everywhere except in the pole at $z = -\frac{d}{c}$. Since a Möbius transformation remains unchanged by scaling with a coefficient, we may normalize it to yield the determinant 1. In a gradient-based optimization setup, the Möbius transformation in each node converges into the fixed points. In particular, the Möbius transformation can have two fixed points (loxodromic), one fixed point (parabolic or circular), or no fixed point. The fixed points can be computed by solving $\frac{az+b}{cz+d} = z$, which gives:

$$\gamma_{1,2} = \frac{a - d + \sqrt{(a-d)^2 - 4bc}}{2c}. \qquad (7)$$

To predict the 3D human pose, we encode the transformation between joints explicitly and locally. Thus, we define $g_\theta(\Lambda)$ in Eq. (4) to be the Möbius transformation per eigenvalue, resulting in the following fractional spectral GCN:

$$x *_G g_\theta = \mathbf{U} \operatorname{Möbius}(\Lambda) \mathbf{U}^\top x = \sum_{i=0}^{N-1} \operatorname{Möbius}_i(\lambda_i) u_i u_i^\top x, \qquad (8)$$

where

$$\operatorname{Möbius}_i(\lambda_i) = \frac{a_i \lambda_i + b_i}{c_i \lambda_i + d_i} \qquad (9)$$

with $a_i, b_i, c_i, d_i, \lambda_i \in \mathbb{C}$.

Applying the Möbius transformation over the Laplacian matrix places the signal in the complex domain. To return back to the real domain, we sum it up with its conjugate:

$$Z = 2\Re\{w \mathbf{U} \operatorname{Möbius}(\Lambda) \mathbf{U}^\top x\} \qquad (10)$$

where w is a complex-valued learnable weight. To prevent division by zero, we may add an $\epsilon \geq 0$ to the denominator of Z in Eq. (10). We can easily generalize this definition to the graph signal matrix $X \in \mathbb{C}^{Nxd}$ with d input channels (i.e. a d-dimensional feature vector for every node) and $W \in \mathbb{C}^{dxF}$ feature maps. This defines an example MöbiusGCN block:

$$Z = \sigma(2\Re\{ \mathbf{U} \operatorname{Möbius}(\Lambda) \mathbf{U}^\top XW\} + b), \qquad (11)$$

where $Z \in \mathbb{R}^{NxF}$ is the convolved signal matrix, where F denotes the number of features in the graph signal. For example, d denotes the number of input dimensions of the graph signal and F denotes the number of output dimensions of the graph signal. $\sigma$ is an activation function, e.g. a nonlinearity like a Rectified Linear Unit, ReLU, and b is an optional bias term.

To encode enriched and generalized joint transformation feature representations, we can make the architecture deep by stacking several blocks of MöbiusGCN. Stacking these blocks yields our complete architecture for 3D pose estimation, as shown for example in Figure 1.

To apply the Möbius transformation over the matrix of eigenvalues of the Laplacian matrix, we put the weights of the Möbius transformation for each eigenvalue on four diagonal matrices **A,B,C,D** and compute

$$\mathbf{U} \operatorname{Möbius}(\Lambda) \mathbf{U}^\top = \mathbf{U}(\mathbf{A}\Lambda + \mathbf{B})(\mathbf{C}\Lambda + \mathbf{D})^{-1}\mathbf{U}^\top. \qquad (12)$$

We are utilizing the Möbius transformation for the graph filters in the polar coordinate, which causes the filters in each block to be able to encode the rotation between joints in addition to the translation explicitly. By applying the Möbius transformation, we scale and rotate the eigenvectors of the Laplacian matrix simultaneously. This leads to learning better feature representations and thus, causes a more compact architecture.

Our model encodes the transformation between joints in the complex domain using the normalized Möbius transformation. In the definition of the Möbius transformation, if $ad - bc \neq 0$ the Möbius transformation is an injective function and thus, continuous by the definition of continuity for neural networks. The MöbiusGCN architecture does not suffer from discontinuities in representing rotations, in contrast to Euler angles or the Quaternions. Additionally, this leads to significantly fewer parameters in our architecture.

Referring now to Figure 2, the general procedure for each of the MGC blocks in the MGC chain S12 will be described. In block S21 a normalized Laplacian matrix of the block input is determined. For the first MGC block S12i, the block input is the input graph representation IGR, while for every subsequent MGC block, i.e. blocks S12ii to S12n, the block input is an output graph representation of the respective preceding MGC block. As mentioned before, the MGC blocks are operating in a sequential manner.

In blocks S22 and S23, the eigenvectors of the normalized Laplacian and the corresponding eigenvalues of the normalized Laplacian are determined. These previous steps for example correspond to equation (2) and the associated description.

As the topological structure of the graph does not change between the MGC blocks S12ii to S12n, the normalized Laplacian matrix and the resulting eigenvectors and eigenvalues of the input graph representation IGR are the same for all MGC blocks. Hence, blocks S21, S22 and S23 can be omitted in the second and following MGC blocks, and the determined normalized Laplacian matrix and the resulting eigenvectors and eigenvalues could be used there instead. As an alternative, blocks S21, S22 and S23 can be placed outside the MGC chain S12, such that the result thereof can be used in all MGC blocks of the MGC chain. To this end, the blocks S21, S22 and S23 are shown with dashed lines in Figure 2.

In block S24, a set of graph signals is determined from the block input, e.g. as the graph signal matrix **X** used in equation (11). For example, for each positional feature respectively input dimension there is a corresponding graph signal vector x that includes the positional feature for each vertex i.e. joint. These vectors x combined may result in the graph signal matrix **X**.

In block S25 a weight matrix and a graph filter are applied on the set of graph signals in order to generate a complex valued intermediate result, wherein the graph filter is based on a Möbius parameter set and is applied in a spectral graph convolutional network. This e.g. corresponds to the specific implementation of equations (3) to (5) in conjunction with the Möbius transformation approach of the improved processing concept as defined, for example, in equation (8).

Block S26 includes transforming a result thereof from the complex domain to the real domain. For example, this is expressed in equation (10) by summing the complex result up with its conjugate.

In block S27 an activation function is applied on the result in the real domain for generating the respective output graph representation of the MGC block.

The overall mathematical representation of each MGC block may be represented by equation (11) with b being the optional bias. The matrix Z is included in the output graph representation of the MGC block.

While the MGC chain S12 may include only a single MGC block having an input graph representation with two dimensions, i.e. d = 2 input channels and three output dimensions, i.e. F = 3, better results may be achieved with a higher number of MGC blocks. For example, the MGC chain S12 may comprise 5 to 10 MGC blocks, in particular 6 to 8 MGC blocks. Promising results have been achieved with 7 MGC blocks in the MGC chain, for example.

In the latter case with several MGC blocks, the first MGC block receives the input graph representation with two dimensions and the last MGC block provides its output graph representation with three dimensions, which should be apparent to the skilled reader from the above description. However, the output graph representation of each MGC block except the last MGC block may be defined in a more than three-dimensional space, for example in a 32, a 64 or a 128 dimensional space. From this it follows that the respective subsequent MGC blocks receive as their block inputs data with the same dimensions as the output of the corresponding preceding MGC block.

While a different number of dimensions can be used in the transition between the respective MGC blocks, the same number of dimensions can be used internally of the MGC chain S12, i.e. from the output of the first MGC block to the input of the last MGC block. Promising results have been achieved, for example with 64 and 128 intermediate dimensions.

As noted above, the Möbius parameter set, e.g. with the four diagonal matrices A, B, C, D, employed in equation (12) and the weight matrix W employed in equation 11, may be different, respectively distinct, for each MGC block, if the number of MGC blocks is greater than one. This increases the flexibility of the MGC chain and the possible transformations, i.e. translations and/or rotations, which can be achieved with the respective Möbius transformations.

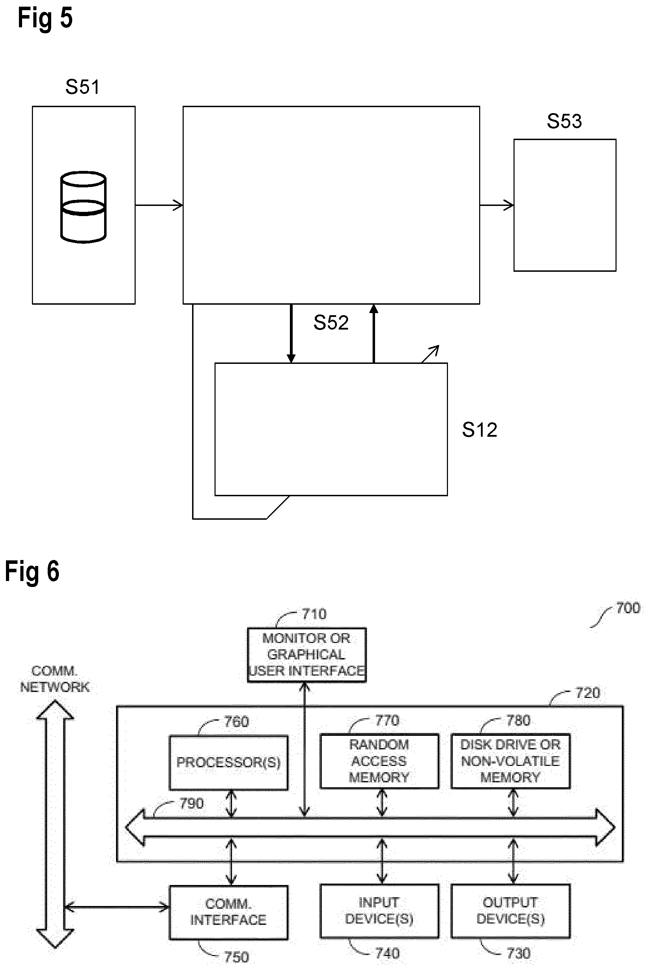

The Möbius parameter sets and the weight matrices may be determined in advance with a machine learning algorithm, which will be described in more detail below in conjunction with Figure 5.

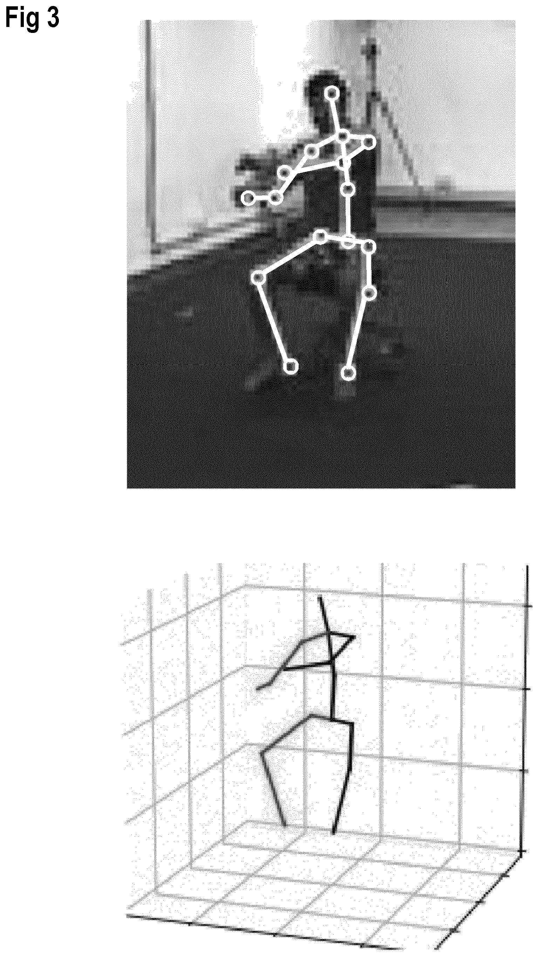

Referring now to Figure 3, example representations of a 2D input in a corresponding pose of a body model in 3D space are shown. In the upper part of Figure 3, a 2D image of a person with a specific pose is shown. Furthermore, in the image a 2D skeleton with joints and their interconnections is annotated. In this example, the structure of the skeleton includes sixteen joints that are interconnected in a specific pattern. As mentioned above, the interconnections may be defined in the adjacency matrix as described above. In the lower part of Figure 3, a 3D representation of the pose of the body model is shown in an example 3D grid. As can be easily seen, the output, i.e. the 3D pose, has the same structure as the input with respect to the number of joints and their interconnections. The 3D representation could either be the regression output of the MGC chain according to the improved processing concept based on the 2D input graph representation, or be a ground truth 3D representation, which could be used for training the parameters.

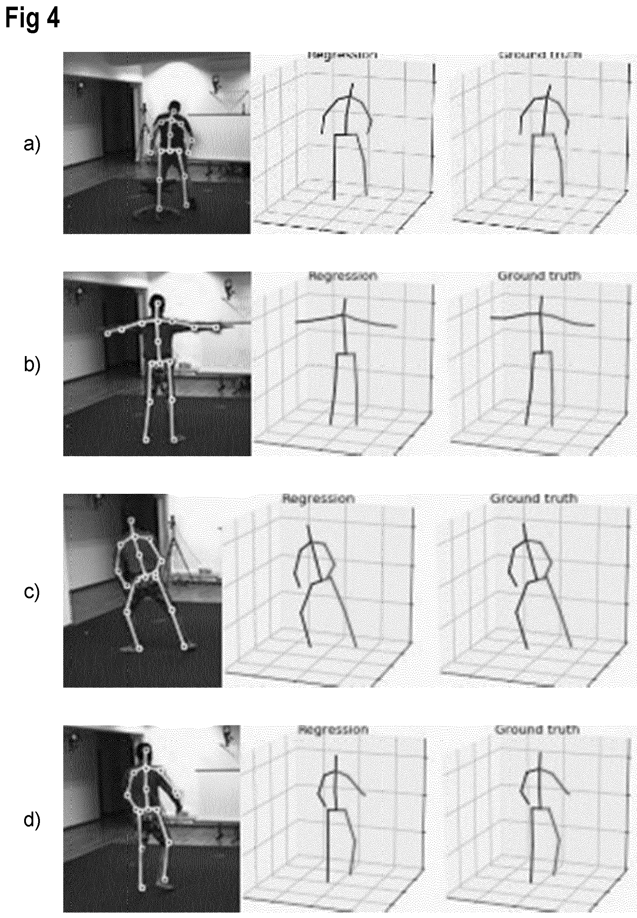

Referring now to Figure 4, several sets of input/output combinations a) to d), each including a 2D image with annotated 2D pose on the left side, a ground truth 3D representation of the pose on the right side and results of processing the respective input graph representation with the method according to the improved processing concept in the middle are shown. As can be seen, promising results can be achieved by applying the improved processing concept.

Experiments have been made using the Human3.6M dataset described in Catalin Ionescu, Dragos Papava, Vlad Olaru and Cristian Sminchisescu, "Human3.6M: Large Scale Datasets and Predictive Methods for 3D Human Sensing in Natural Environments", IEEE Transactions on Pattern Analysis and Machine Intelligence, vol. 36, No. 7, July 2014, and Catalin Ionescu, Fuxin Li and Cristian Sminchisescu, "Latent Structured Models for Human Pose Estimation", International Conference on Computer Vision, 2011.

Referring now to Figure 5, an example block diagram of a method for determining at least one Möbius parameter set and corresponding weight factors to be used in the MGC chain S12 of Figure 1 is shown. For example, in block S51 a plurality of training data sets is provided, wherein each of the training data sets comprises, for example, a 2D graph representation of a body model in 2D space, the 2D graph representation comprising a plurality of joints with associated joint positions and interconnections between the joints, and an associated 3D graph representation of the body model in 3D space. For example, the annotations of the examples in Figure 4 could be used as the 2D graph representations. Furthermore, the associated ground truth 3D poses could be used as the associated 3D graph representations.

Referring again to Figure 5, the MGC chain S12 is provided having the same structure as in the target MGC chain to be used afterwards. A detailed description of the MGC chain S12 is omitted here to avoid repetition.

In block S52 the Möbius parameter set and the weight matrix and, if applicable, the bias, of each MGC block of the sequential MGC chain S12 are trained using a machine learning algorithm. To this end the 2D graph representation of each training data set is provided as the input graph representation and the associated 3D graph representation is provided as a desired output of the MGC chain. Standard machine learning concepts may be adjusted to the specific details of the MGC chain. The output of block S52 is the full set of Möbius parameter sets and weight matrices for each MGC block of the MGC chain S12, which sets can then be applied for productive use of the improved processing concept. As described above, no further use of a machine learning algorithm is needed afterwards.

For example, the inputs to our architecture are the 2D joint positions estimated from the RGB images for e.g. four cameras independently. The method according to the improved processing concept is independent of the off-the-shelf architecture used for estimating 2D joint positions. The ground truth 3D joint positions in the corresponding dataset are given in world coordinates. E.g., to make the architecture trainable, we chose a predefined joint, e.g. the pelvis joint, as the center of the coordinate system. We do not use any augmentations throughout all experiments.

We trained our architecture with an initial learning rate of 0.001 and used mini-batches of size 64. The learning rate may be dropped with a decay rate of 0.5 when the loss on the validation set saturates. The architecture contains seven MöbiusGCN blocks, where each block contains either 64 channels (leading to 0.04M parameters) or 128 channels (leading to 0.16M parameters). The weights may be initialized, e.g. the using the Xavier method, which is described in Glorot et al. "Understanding the Difficulty of Training Deep Feedforward Neural Networks", in AISTATS, 2010. To help the architecture differentiate between different 3D poses with the same 2D pose, we may provide the center of mass of the subject to the MöbiusGCN architecture as an additional input. We predict 16 joints.

For the loss function we use the mean squared error (MSE) between the 3D ground truth joint locations Y and our predictions $\hat{Y}$:

$$L(Y, \hat{Y}) \;=\; \sum_{i=1}^{k} \big(Y_i - \hat{Y}_i\big)^2 . \qquad (13)$$

In complex-valued neural networks, the data and the weights are represented in the complex domain. A complex function is holomorphic (complex-differentiable) if not only their partial derivatives exist but also satisfy the Cauchy-Riemann equations.

In complex-valued neural networks, the complex convolution operator is defined as:

$$W * h \;=\; (A * x - B * y) + i(B * x + A * y), \qquad (14)$$

where $W = A + iB$ and $h = x + iy$. A and B are real matrices and x and y are real vectors. We also apply the same operators on our graph signals and graph filters.

A major practical limitation with training neural network architectures is to acquire sufficiently large and accurately labeled datasets. Semi-supervised methods try to address this by combining fewer labeled samples with large amounts of unlabeled data. Another benefit of MöbiusGCN is that we require fewer training samples. Having a better feature representation in MöbiusGCN leads to a light architecture and therefore, requires less training samples.

While human body poses have been used as examples in the above description, it should be apparent that the improved processing concept can be employed also for body models of other objects, e.g. of animals or even artificial structures like robots. A prerequisite may only be that the structure of such objects can be represented by something like a skeleton with joints and their interconnections.

Fig. 6 is a block diagram of a computer system that may incorporate embodiments according to the improved processing concept. Fig. 6 is merely illustrative of an embodiment incorporating the improved processing concept and does not limit the scope of the invention as recited in the claims. One of ordinary skill in the art would recognize other variations, modifications and alternatives, as long as these variations, modifications and alternatives are covered by the appended claims.

In one embodiment, computer system 700 typically includes a monitor 710, a computer 720, user output devices 730, user input devices 740, communications interface 750, and the like.

As shown in Fig. 6, computer 720 may include a processor(s) 760 that communicates with a number of peripheral devices via a bus subsystem 790. These peripheral devices may include user output devices 730, user input devices 740, communications interface 750, and a storage subsystem, such as random access memory (RAM) 770 and disk drive 780. The processor 760 may include or be connected to one or more graphic processing units (GPU).

User input devices 740 include all possible types of devices and mechanisms for inputting information to computer system 720. These may include a keyboard, a keypad, a touch screen incorporated into the display, audio input devices such as voice recognition systems, microphones, and other types of input devices. In various embodiments, user input devices 740 are typically embodied as a computer mouse, a trackball, a track pad, a joystick, wireless remote, drawing tablet, voice command system, eye tracking system, and the like. User input devices 740 typically allow a user to select objects, icons, text and the like that appear on the monitor 710 via a command such as a click of a button or the like. User input devices 740 may also include color and/or depth cameras, body shape and/or pose tracking sensors, hand tracking devices, head tracking devices or the like. User input devices 740 may particularly include various types of cameras, e.g. a DSLR camera or a camera of a smartphone or the like. Such a camera or smartphone or other mobile device may be connected to computer 720 over a communication network connected via communications interfaces 750.

User output devices 730 include all possible types of devices and mechanisms for outputting information from computer 720. These may include a display (e.g., monitor 710), non-visual displays such as audio output devices, etc.

Communications interface 750 provides an interface to other communication networks and devices. Communications interface 750 may serve as an interface for receiving data from and transmitting data to other systems. Embodiments of communications interface 750 typically include an Ethernet card, a modem (telephone, satellite, cable, ISDN), (asynchronous) digital subscriber line (DSL) unit, FireWire interface, USB interface, wireless connections like Wi-Fi and Bluetooth, and the like. For example, communications interface 750 may be coupled to a computer network, to a FireWire bus, or the like. In other embodiments, communications interfaces 750 may be physically integrated on the motherboard of computer 720, and may be a software program, such as soft DSL, or the like.

In various embodiments, computer system 700 may also include software that enables communications over a network such as the HTTP, TCP/IP, RTP/RTSP protocols, and the like.

RAM 770 and disk drive 780 are examples of tangible media configured to store data, including executable computer code, human readable code, or the like. Other types of tangible media include solid state drives, SSD, floppy disks, removable hard disks, optical storage media such as CD-ROMS, DVDs and bar codes, semiconductor memories such as flash memories, read-only-memories (ROMS), battery-backed volatile memories, networked storage devices, and the like. RAM 770 and disk drive 780 may be configured to store the basic programming and data constructs that provide the functionality of the improved modelling concept.

Software code modules and instructions that provide the functionality of the improved processing concept may be stored in RAM 770 and disk drive 780. These software modules may be executed by processor(s) 760, e.g. by the GPU(s). RAM 770 and disk drive 780 may also provide a repository for storing data used in accordance with the present invention.

RAM 770 and disk drive 780 may include a number of memories including a main random access memory (RAM) for storage of instructions and data during program execution and a read only memory (ROM) in which fixed instructions are stored. RAM 770 and disk drive 780 may include a file storage subsystem providing persistent (non-volatile) storage for program and data files. RAM 770 and disk drive 780 may also include removable storage systems, such as removable flash memory.

Bus subsystem 790 provides a mechanism for letting the various components and subsystems of computer 720 communicate with each other as intended. Although bus subsystem 790 is shown schematically as a single bus, alternative embodiments of the bus subsystem may utilize multiple busses.

Fig. 6 is representative of a computer system capable of embodying the improved processing concept. It will be readily apparent to one of ordinary skill in the art that many other hardware and software configurations are suitable for such use. For example, the computer may be a mobile device, in particular a mobile phone, or desktop, portable, rack-mounted or tablet configuration. Additionally, the computer may be a series of networked computers.

Various embodiments of the improved processing concept can be implemented in the form of logic in software or hardware or a combination of both. The logic may be stored in a computer readable or machine-readable storage medium as a set of instructions adapted to direct a processor of a computer system to perform a set of steps disclosed in embodiments of the improved processing concept. The logic may form part of a computer program product adapted to direct an information-processing device to automatically perform a set of steps disclosed in embodiments of the improved processing concept.

The specification and drawings are, accordingly, to be regarded in an illustrative rather than a restrictive sense. However, it will be evident that various modifications and changes may be made thereunto without departing from the scope of the invention as set forth in the claims.

**Claims**

1. A computer implemented method for determining a pose of a body model in 3D space from a 2D input, the method comprising:

   - acquiring an input graph representation of a body model in 2D space, the input graph representation comprising a plurality of joints with associated joint positions and interconnections between the joints;
   - processing the input graph representation with a sequential Möbius graph convolution, MGC, chain comprising one or more MGC blocks; wherein
   - each MGC block performs the following:

     - receiving the input graph representation in 2D space as a block input if the MGC block is a first MGC block of the sequential MGC chain, or else receiving an output graph representation of a preceding MGC block of the sequential MGC chain as the block input;
     - determining a set of graph signals from the block input, wherein each graph signal is a vector of a defined feature of one joint of the plurality of joints of the block input, and the set of graph signals is a matrix formed from the vectors for all defined features of the plurality of joints;
     - applying a weight matrix and a graph filter on the set of graph signals in order to generate a complex valued intermediate result, wherein the graph filter is based on a Möbius parameter set and is applied in a spectral graph convolutional network, wherein a diagonal matrix $\Lambda$ contains eigenvalues of a Laplacian matrix of the input graph representation, the Möbius parameter set is formed from weights of a Möbius transformation for each eigenvalue of $\Lambda$ put on diagonal matrices **A,B,C,D,** and applying the graph filter in a spectral graph convolutional network comprises computing a Möbius transform Möbius($\Lambda$) on the matrix $\Lambda$ of eigenvalues according to Möbius($\Lambda$) = **(A$\Lambda$ + B)(C$\Lambda$ + D)$^{-1}$;**
     - transforming the complex valued intermediate result into a real valued result; and
     - applying an activation function on the real valued result for generating the output graph representation of the MGC block; and wherein

     - a last MGC block of the sequential MGC chain provides the output graph representation of the body model in 3D space as an output.

2. The method according to claim 1, wherein the Möbius parameter set in each MGC block is predetermined or pre-trained with a machine learning algorithm and the weight factors of the weight matrix in each MGC block are predetermined or pre-trained with a machine learning algorithm.

3. The method according to claim 2, wherein the Möbius parameter set and the weight matrix are different for each MGC block, if a number of MGC blocks of the MGC chain is greater than one.

4. The method according to one of claims 1 to 3, wherein the output graph representation of each MGC block except the last MGC block is defined in a more than 3-dimensional space, in particular in 32-, 64- or 128-dimensional space, if a number of MGC blocks of the MGC chain is greater than one.

5. The method according to one of claims 1 to 4, wherein a topological graph structure in each MGC block is not changed between the respective block input and the respective output graph representation.

6.   The method according to one of claims 1 to 5, wherein

   - the input graph representation and each output graph representation comprise vertices and edges;
   - each vertex corresponds to a joint and comprises the associated joint position; and
   - each edge corresponds to one of the interconnections between the joints.

7.   The method according to one of claims 1 to 6, wherein the input graph representation and each output graph representation are undirected, unweighted and connected.

8.   The method according to one of claims 1 to 7, wherein transforming the complex valued intermediate result into a real valued result includes applying a bias, in particular adding a bias.

9.   The method according to one of claims 1 to 8, wherein the activation function comprises a Rectified Linear Unit, ReLU.

10.   The method according to one of claims 1 to 9, wherein a number of MGC blocks comprised by the sequential MGC chain is in the range from 5 to 10, in particular from 6 to 8.

11.   The method according to one of claims 1 to 10, wherein for applying the graph filter in a spectral graph convolutional network, a normalized Laplacian of the input graph representation and eigenvectors and eigenvalues of the normalized Laplacian are determined.

12.   The method according to one of claims 1 to 11, further comprising receiving a 2D image of a body as the 2D input and determining the input graph representation of the body model in 2D space based on the 2D image.

13.   A computer implemented method for determining at least one Möbius parameter set configured to be used in the method according to one of claims 1 to 12, comprising

   - providing a sequential Möbius graph convolution, MGC, chain comprising one or more MGC blocks, wherein each MGC block performs the following:

      - receiving an input graph representation of a body model in 2D space as a block input if the MGC block is a first MGC block of the sequential MGC chain, or else receiving an output graph representation of a preceding MGC block of the sequential MGC chain as the block input;
      - determining a set of graph signals from the block input, wherein each graph signal is a vector of a defined feature of one joint of the plurality of joints of the block input, and the set of graph signals is a matrix formed from the vectors for all defined features of the plurality of joints;
      - applying a weight matrix and applying a graph filter on the set of graph signals in order to generate a complex valued intermediate result, wherein the graph filter is based on a Möbius parameter set and is applied in a spectral graph convolutional network, wherein a diagonal matrix $\Lambda$ contains eigenvalues of a Laplacian matrix of the input graph representation, the Möbius parameter set is formed from weights of a Möbius transformation for each eigenvalue of $\Lambda$ put on diagonal matrices **A,B,C,D,** and applying the graph filter in a spectral graph convolutional network comprises computing a Möbius transform Möbius($\Lambda$) on the matrix $\Lambda$ of eigenvalues according to Möbius($\Lambda$) = **(A$\Lambda$ + B)(C$\Lambda$ + D)$^{-1}$;**
      - transforming the complex valued intermediate result into a real valued result; and
      - applying an activation function on the real valued result for generating the output graph representation of the MGC block; wherein
      - a last MGC block of the sequential MGC chain provides the output graph representation of the body model in 3D space as an output of the MGC chain;

   - providing a plurality of training data sets, each of the training data sets comprising

      - a 2D graph representation of a body model in 2D space, the 2D graph representation comprising a plurality of joints with associated joint positions and interconnections between the joints; and
      - an associated 3D graph representation of the body model in 3D space;

   - training, using a machine learning algorithm, the Möbius parameter set and the weight matrix of each MGC block of the sequential MGC chain by providing the 2D graph representation of each training data set as the input graph representation and providing the associated 3D graph representation as a desired output of the MGC chain.

14. A computer program product comprising instructions, which, when executed by a computer system, cause the computer system to execute a method according to one of the preceding claims.

**Patentansprüche**

1. Computerimplementiertes Verfahren zum Bestimmen einer Pose eines Körpermodells im 3D-Raum aus einer 2D-Eingabe, das Verfahren umfassend:

- Erfassen einer Eingangsgraphendarstellung eines Körpermodells im 2D-Raum, wobei die Eingangsgraphendarstellung eine Vielzahl von Gelenken mit zugehörigen Gelenkpositionen und Verbindungen zwischen den Gelenken umfasst;
- Verarbeiten der Eingangsgraphendarstellung mit einer sequentiellen Möbius-Graph-Faltung, MGC, -Kette, die einen oder mehrere MGC-Blöcke umfasst; wobei
- jeder MGC-Block Folgendes ausführt:

    - Empfangen der Eingangsgraphendarstellung im 2D-Raum als einen Blockeingang, wenn der MGC-Block ein erster MGC-Block der sequentiellen MGC-Kette ist, oder andernfalls Empfangen einer Ausgangsgraphendarstellung eines vorhergehenden MGC-Blocks der sequentiellen MGC-Kette als den Blockeingang;
    - Bestimmen eines Satzes von Graphensignalen aus dem Blockeingang, wobei jedes Graphensignal ein Vektor eines definierten Merkmals eines Gelenks der Vielzahl von Gelenken des Blockeingangs ist und der Satz von Graphensignalen eine Matrix ist, die aus den Vektoren für alle definierten Merkmale der Vielzahl von Gelenken gebildet ist;
    - Anwenden einer Gewichtungsmatrix und eines Graphfilters auf den Satz von Graphensignalen, um ein komplexwertiges Zwischenergebnis zu erzeugen, wobei der Graphfilter auf einem Möbius-Parametersatz basiert und in einem spektralen Graph-Faltungsnetzwerk angewendet wird, wobei eine Diagonalmatrix $\Lambda$ Eigenwerte einer Laplace-Matrix der Eingangsgraphendarstellung enthält, der Möbius-Parametersatz aus Gewichten einer Möbius-Transformation für jeden Eigenwert von $\Lambda$ gebildet wird, die auf die Diagonalmatrizen **A,B,C,D** gesetzt werden, und Anwenden des Graphfilters in einem spektralen Graph-Faltungsnetzwerk das Berechnen einer Möbius-Transformation Möbius(A) auf der Matrix $\Lambda$ der Eigenwerte gemäß Möbius(A) = **(A$\Lambda$ + B)(C$\Lambda$ + D)$^{-1}$** umfasst;
    - Umwandeln des komplexwertigen Zwischenergebnisses in ein reellwertiges Ergebnis; und
    - Anwenden einer Aktivierungsfunktion auf das reellwertige Ergebnis, um die Ausgangsgraphendarstellung des MGC-Blocks zu erzeugen; und wobei

- ein letzter MGC-Block der sequentiellen MGC-Kette die Ausgangsgraphendarstellung des Körpermodells im 3D-Raum als Ausgabe liefert.

2. Verfahren nach Anspruch 1, wobei der Möbius-Parametersatz in jedem MGC-Block mit einem maschinellen Lernalgorithmus vorbestimmt oder vortrainiert ist und die Gewichtungsfaktoren der Gewichtungsmatrix in jedem MGC-Block mit einem maschinellen Lernalgorithmus vorbestimmt oder vortrainiert sind.

3. Verfahren nach Anspruch 2, wobei der Möbius-Parametersatz und die Gewichtungsmatrix für jeden MGC-Block unterschiedlich sind, wenn eine Anzahl von MGC-Blöcken der MGC-Kette größer als eins ist.

4. Verfahren nach einem der Ansprüche 1 bis 3, wobei die Ausgangsgraphendarstellung jedes MGC-Blocks außer dem letzten MGC-Block in einem mehr als dreidimensionalen Raum definiert ist, insbesondere in einem 32-, 64- oder 128-dimensionalen Raum, wenn eine Anzahl von MGC-Blöcken der MGC-Kette größer als eins ist.

5. Verfahren nach einem der Ansprüche 1 bis 4, wobei eine topologische Graphstruktur in jedem MGC-Block zwischen dem jeweiligen Blockeingang und der jeweiligen Ausgangsgraphendarstellung nicht verändert wird.

6. Verfahren nach einem der Ansprüche 1 bis 5, wobei

- die Eingangsgraphendarstellung und jede Ausgangsgraphendarstellung Eckpunkte und Kanten umfassen;
- jeder Eckpunkt einem Gelenk entspricht und die zugehörige Gelenkposition umfasst; und
- jede Kante einer der Verbindungen zwischen den Gelenken entspricht.

7. Verfahren nach einem der Ansprüche 1 bis 6, wobei die Eingangsgraphendarstellung und jede Ausgangsgraphendarstellung ungerichtet, ungewichtet und verbunden sind.

8. Verfahren nach einem der Ansprüche 1 bis 7, wobei das Umwandeln des komplexwertigen Zwischenergebnisses in ein reellwertiges Ergebnis das Anwenden einer Bias, insbesondere das Addieren einer Bias, umfasst.

9. Verfahren nach einem der Ansprüche 1 bis 8, wobei die Aktivierungsfunktion eine Rectified Linear Unit, ReLU, umfasst.

10. Verfahren nach einem der Ansprüche 1 bis 9, wobei eine Anzahl von MGC-Blöcken, die von der sequenziellen MGC-Kette umfasst werden, im Bereich von 5 bis 10, insbesondere von 6 bis 8, liegt.

11. Verfahren nach einem der Ansprüche 1 bis 10, wobei zum Anwenden des Graphfilters in einem spektralen Graph-Faltungsnetzwerk ein normalisierter Laplace-Operator der Eingangsgraphendarstellung und Eigenvektoren und Eigenwerte des normalisierten Laplace-Operators bestimmt werden.

12. Verfahren nach einem der Ansprüche 1 bis 11, das ferner umfasst: Empfangen eines 2D-Bildes eines Körpers als 2D-Eingabe und Bestimmen der Eingangsgraphendarstellung des Körpermodells im 2D-Raum auf der Grundlage des 2D-Bildes.

13. Computerimplementiertes Verfahren zum Bestimmen mindestens eines Möbius-Parametersatzes, der zur Verwendung in dem Verfahren nach einem der Ansprüche 1 bis 12 eingerichtet ist, umfassend

- Bereitstellen einer sequenziellen Möbius-Graph-Faltung, MGC, -Kette, die einen oder mehrere MGC-Blöcke umfasst; wobei jeder MGC-Block Folgendes ausführt:

- Empfangen der Eingangsgraphendarstellung im 2D-Raum als einen Blockeingang, wenn der MGC-Block ein erster MGC-Block der sequenziellen MGC-Kette ist, oder andernfalls Empfangen einer Ausgangsgraphendarstellung eines vorhergehenden MGC-Blocks der sequenziellen MGC-Kette als den Blockeingang;
- Bestimmen eines Satzes von Graphensignalen aus dem Blockeingang, wobei jedes Graphensignal ein Vektor eines definierten Merkmals eines Gelenks der Vielzahl von Gelenken des Blockeingangs ist und der Satz von Graphensignalen eine Matrix ist, die aus den Vektoren für alle definierten Merkmale der Vielzahl von Gelenken gebildet ist;
- Anwenden einer Gewichtungsmatrix und eines Graphfilters auf den Satz von Graphensignalen, um ein komplexwertiges Zwischenergebnis zu erzeugen, wobei der Graphfilter auf einem Möbius-Parametersatz basiert und in einem spektralen Graph-Faltungsnetzwerk angewendet wird, wobei eine Diagonalmatrix $\Lambda$ Eigenwerte einer Laplace-Matrix der Eingangsgraphendarstellung enthält, der Möbius-Parametersatz aus Gewichten einer Möbius-Transformation für jeden Eigenwert von $\Lambda$ gebildet wird, die auf die Diagonalmatrizen **A, B, C, D** gesetzt werden, und Anwenden des Graphfilters in einem spektralen Graph-Faltungsnetzwerk das Berechnen einer Möbius-Transformation Möbius(A) auf der Matrix $\Lambda$ der Eigenwerte gemäß Möbius(A) = $\mathbf{(A\Lambda + B)(C\Lambda + D)^{-1}}$ umfasst;
- Umwandeln des komplexwertigen Zwischenergebnisses in ein reellwertiges Ergebnis; und
- Anwenden einer Aktivierungsfunktion auf das reellwertige Ergebnis, um die Ausgangsgraphendarstellung des MGC-Blocks zu erzeugen; wobei
- ein letzter MGC-Block der sequenziellen MGC-Kette die Ausgangsgraphendarstellung des Körpermodells im 3D-Raum als Ausgabe liefert;
- Bereitstellen einer Vielzahl von Trainingsdatensätzen, wobei jeder der Trainingsdatensätze umfasst

- eine 2D-Graphen-Darstellung eines Körpermodells im 2D-Raum, wobei die 2D-Graphen-Darstellung eine Vielzahl von Gelenken mit zugehörigen Gelenkpositionen und Verbindungen zwischen den Gelenken umfasst; und
- eine zugehörige 3D-Graphen-Darstellung des Körpermodells im 3D-Raum;

- Trainieren des Möbius-Parametersatzes und der Gewichtungsmatrix jedes MGC-Blocks der sequenziellen MGC-Kette unter Verwendung eines maschinellen Lernalgorithmus, indem die 2D-Graphendarstellung jedes Trainingsdatensatzes als Eingangsgraphendarstellung bereitgestellt wird und die zugehörige 3D-Graphendarstellung als gewünschte Ausgabe der MGC-Kette bereitgestellt wird.

14. Computerprogrammprodukt, das Anweisungen umfasst, die, wenn sie von einem Computersystem ausgeführt werden, das Computersystem veranlassen, ein Verfahren gemäß einem der vorstehenden Ansprüche auszuführen.

**Revendications**

1. Procédé mis en œuvre par ordinateur pour déterminer la pose d'un modèle corporel dans un espace 3D à partir d'une entrée 2D, le procédé comprenant :

   - acquérir une représentation sous forme de graphe d'entrée d'un modèle corporel dans un espace 2D, la représentation sous forme de graphe d'entrée comprenant une pluralité d'articulations avec des positions d'articulation associées et des interconnexions entre les articulations ;
   - traiter la représentation sous forme de graphe d'entrée avec une chaîne de convolution de graphes de Möbius, MGC, séquentielle comprenant un ou plusieurs blocs MGC ; dans lequel
   - chaque bloc MGC effectue les opérations suivantes :

     - recevoir la représentation sous forme de graphe en entrée dans l'espace 2D en tant qu'entrée de bloc si le bloc MGC est un premier bloc MGC de la chaîne MGC séquentielle, ou bien recevoir une représentation sous forme de graphe en sortie d'un bloc MGC précédent de la chaîne MGC séquentielle en tant qu'entrée de bloc ;
     - déterminer un ensemble de signaux graphiques à partir de l'entrée de bloc, dans lequel chaque signal graphique est un vecteur d'une caractéristique définie d'une articulation parmi la pluralité d'articulations de l'entrée de bloc, et l'ensemble de signaux graphiques est une matrice formée à partir des vecteurs pour toutes les caractéristiques définies de la pluralité d'articulations ;
     - appliquer une matrice de poids et un filtre de graphe sur l'ensemble de signaux de graphe afin de générer un résultat intermédiaire à valeur complexe, dans lequel le filtre de graphe est basé sur un ensemble de paramètres de Möbius et est appliqué dans un réseau convolutif de graphe spectral, dans lequel une matrice diagonale $\Lambda$ contient les valeurs propres d'une matrice laplacienne de la représentation sous forme de graphe d'entrée, l'ensemble de paramètres de Möbius est formé à partir des poids d'une transformation de Möbius pour chaque valeur propre de $\Lambda$ placée sur les matrices diagonales **A,B,C,B,** et appliquer le filtre graphique dans un réseau convolutif spectral comprend le calcul d'une transformation de Möbius($\Lambda$) sur la matrice $\Lambda$ des valeurs propres selon Möbius($\Lambda$) = **(A$\Lambda$ + B)(C$\Lambda$ + D)$^{-1}$** ;
     - transformer le résultat intermédiaire à valeur complexe en un résultat à valeur réelle ; et
     - appliquer une fonction d'activation au résultat à valeur réelle pour générer la représentation sous forme de graphe de sortie du bloc MGC ; et dans lequel

   - un dernier bloc MGC de la chaîne MGC séquentielle fournit la représentation sous forme de graphe de sortie du modèle de corps dans l'espace 3D en tant que sortie.

2. Procédé selon la revendication 1, dans lequel le paramètre Möbius défini dans chaque bloc MGC est prédéterminé ou préentraîné à l'aide d'un algorithme d'apprentissage automatique et les facteurs de poids de la matrice de poids dans chaque bloc MGC sont prédéterminés ou pré-entraînés à l'aide d'un algorithme d'apprentissage automatique.

3. Procédé selon la revendication 2, dans lequel le paramètre Möbius défini et la matrice de poids sont différents pour chaque bloc MGC, si le nombre de blocs MGC de la chaîne MGC est supérieur à un.

4. Procédé selon l'une des revendications 1 à 3, dans lequel la représentation sous forme de graphe de sortie de chaque bloc MGC, à l'exception du dernier bloc MGC, est définie dans un espace à plus de 3 dimensions, en particulier dans un espace à 32, 64 ou 128 dimensions, si le nombre de blocs MGC de la chaîne MGC est supérieur à un.

5. Procédé selon l'une des revendications 1 à 4, dans lequel une structure de graphe topologique dans chaque bloc MGC n'est pas modifiée entre l'entrée de bloc respective et la représentation sous forme de graphe de sortie respective.

**6.** Procédé selon l'une des revendications 1 à 5, dans lequel

- la représentation sous forme de graphe d'entrée et chaque représentation sous forme de graphe de sortie comprennent des sommets et des arêtes ;
- chaque sommet correspond à une articulation et comprend la position d'articulation associée ; et
- chaque arête correspond à l'une des interconnexions entre les articulations.

**7.** Procédé selon l'une des revendications 1 à 6, dans lequel la représentation sous forme de graphe d'entrée et chaque représentation sous forme de graphe de sortie sont non orientées, non pondérées et connectées.

**8.** Procédé selon l'une des revendications 1 à 7, dans lequel la transformation du résultat intermédiaire à valeur complexe en un résultat à valeur réelle comprend l'application d'un biais, en particulier l'ajout d'un biais.

**9.** Procédé selon l'une des revendications 1 à 8, dans lequel la fonction d'activation comprend une unité linéaire rectifiée, ReLU.

**10.** Procédé selon l'une des revendications 1 à 9, dans lequel un nombre de blocs MGC compris dans la chaîne MGC séquentielle est compris entre 5 et 10, en particulier entre 6 et 8.

**11.** Procédé selon l'une des revendications 1 à 10, dans lequel, pour appliquer le filtre de graphe dans un réseau convolutif de graphes spectraux, un Laplacien normalisé de la représentation sous forme de graphe d'entrée et des vecteurs propres et des valeurs propres du Laplacien normalisé sont déterminés.

**12.** Procédé selon l'une des revendications 1 à 11, comprenant en outre la réception d'une image 2D d'un corps en tant qu'entrée 2D et la détermination de la représentation sous forme de graphe d'entrée du modèle de corps dans l'espace 2D sur la base de l'image 2D.

**13.** Procédé mis en œuvre par ordinateur pour déterminer au moins un ensemble de paramètres Möbius configuré pour être utilisé dans le procédé selon l'une des revendications 1 à 12, comprenant

- fournir d'une chaîne de convolution de graphes Möbius, MGC, séquentielle comprenant un ou plusieurs blocs MGC, dans laquelle chaque bloc MGC effectue les opérations suivantes :

  - recevoir la représentation sous forme de graphe en entrée dans l'espace 2D en tant qu'entrée de bloc si le bloc MGC est un premier bloc MGC de la chaîne MGC séquentielle, ou bien recevoir une représentation sous forme de graphe en sortie d'un bloc MGC précédent de la chaîne MGC séquentielle en tant qu'entrée de bloc ;
  - déterminer un ensemble de signaux graphiques à partir de l'entrée de bloc, dans lequel chaque signal graphique est un vecteur d'une caractéristique définie d'une articulation parmi la pluralité d'articulations de l'entrée de bloc, et l'ensemble de signaux graphiques est une matrice formée à partir des vecteurs pour toutes les caractéristiques définies de la pluralité d'articulations ;
  - appliquer une matrice de poids et un filtre de graphe sur l'ensemble de signaux de graphe afin de générer un résultat intermédiaire à valeur complexe, dans lequel le filtre de graphe est basé sur un ensemble de paramètres de Möbius et est appliqué dans un réseau convolutif de graphe spectral, dans lequel une matrice diagonale $\Lambda$ contient les valeurs propres d'une matrice laplacienne de la représentation sous forme de graphe d'entrée, l'ensemble de paramètres de Möbius est formé à partir des poids d'une transformation de Möbius pour chaque valeur propre de $\Lambda$ placée sur les matrices diagonales **A,B,C,B,** et appliquer le filtre graphique dans un réseau convolutif spectral comprend le calcul d'une transformation de Möbius$(\Lambda)$ sur la matrice $\Lambda$ des valeurs propres selon Möbius$(\Lambda)$ = $(A\Lambda + B)(C\Lambda + D)^{-1}$ ;
  - transformer le résultat intermédiaire à valeur complexe en un résultat à valeur réelle ; et
  - appliquer une fonction d'activation au résultat à valeur réelle pour générer la représentation sous forme de graphe de sortie du bloc MGC ; dans lequel
  - un dernier bloc MGC de la chaîne MGC séquentielle fournit la représentation sous forme de graphe de sortie du modèle de corps dans l'espace 3D en tant que sortie ;

- fournir une pluralité d'ensembles de données d'apprentissage, chacun des ensembles de données d'apprentissage comprenant

  - une représentation sous forme de graphe 2D d'un modèle corporel dans l'espace 2D, la représentation sous forme de graphe 2D comprenant une pluralité d'articulations avec des positions d'articulation associées et des interconnexions entre les articulations ; et
- une représentation sous forme de graphe 3D associée du modèle corporel dans l'espace 3D ;

- entraîner, à l'aide d'un algorithme d'apprentissage automatique, l'ensemble de paramètres de Möbius et la matrice de poids de chaque bloc MGC de la chaîne MGC séquentielle en fournissant la représentation sous forme de graphe en 2D de chaque ensemble de données d'apprentissage comme représentation sous forme de graphe d'entrée et en fournissant la représentation sous forme de graphe en 3D associée comme sortie souhaitée de la chaîne MGC.

**14.** Produit de programme informatique comprenant des instructions qui, lorsqu'elles sont exécutées par un système informatique, amènent le système informatique à exécuter un procédé selon l'une des revendications précédentes.

## Fig 1

## Fig 2

**Fig 3**

# Fig 4

**Fig 5**

S51

S53

S52

S12

**Fig 6**

COMM.
NETWORK

710
MONITOR OR
GRAPHICAL
USER INTERFACE

700

720

760
PROCESSOR(S)

770
RANDOM
ACCESS
MEMORY

780
DISK DRIVE OR
NON-VOLATILE
MEMORY

790

750
COMM.
INTERFACE

740
INPUT
DEVICE(S)

730
OUTPUT
DEVICE(S)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 113420676 A

### Non-patent literature cited in the description

- Semantic Graph Convolutional Networks for 3D Human Pose Regression. **ZHAO LONG et al.** 2019 IEEE/CVF CONFERENCE ON COMPUTER VISION AND PATTERN RECOGNITION (CVPR). IEEE, 15 June 2019, 3420-3430
- Exploiting Spatial-Temporal Relationships for 3D Pose Estimation via Graph Convolutional Networks. **CAI YUJUN et al.** 2019 IEEE/CVF INTERNATIONAL CONFERENCE ON COMPUTER VISION (ICCV). IEEE, 27 October 2019, 2272-2281
- Skeleton-Aware 3D Human Shape Reconstruction From Point Clouds. **JIANG HAIYONG et al.** 2019 IEEE/CVF INTERNATIONAL CONFERENCE ON COMPUTER VISION (ICCV). IEEE, 27 October 2019, 5430-5440
- Space-Time-Separable Graph Convolutional Network for Pose Forecasting. **THEODOROS SOFIANOS et al.** ARXIV.ORG. CORNELL UNIVERSITY LIBRARY, 09 October 2021
- **CATALIN IONESCU ; DRAGOS PAPAVA ; VLAD OLARU ; CRISTIAN SMINCHISESCU**. Human3.6M: Large Scale Datasets and Predictive Methods for 3D Human Sensing in Natural Environments. *IEEE Transactions on Pattern Analysis and Machine Intelligence*, July 2014, vol. 36 (7)
- **CATALIN IONESCU ; FUXIN LI ; CRISTIAN SMINCHISESCU**. Latent Structured Models for Human Pose Estimation. *International Conference on Computer Vision*, 2011
- **GLOROT et al.** Understanding the Difficulty of Training Deep Feedforward Neural Networks. *AISTATS*, 2010